# EUROPÄISCHE PATENTSCHRIFT

(11) **EP 1 379 413 B1**
(45) Veröffentlichungstag und Bekanntmachung des Hinweises auf die Patenterteilung: **10.05.2006**
(21) Anmeldenummer: 02714067.2
(22) Anmeldetag: 26.02.2002
(51) Int. Cl.: B60S 1/38

(54) **WISCHBLATT ZUM REINIGEN VON SCHEIBEN INSBESONDERE VON KRAFTFAHRZEUGEN**
WIPER BLADE FOR CLEANING PANES OF GLASS, PARTICULARLY IN MOTOR VEHICLES
BALAI D'ESSUIE-GLACE POUR LE NETTOYAGE DE VITRES, EN PARTICULIER DE VEHICULES AUTOMOBILES

(30) Priorität: 16.03.2001 DE 10112658
(43) Veröffentlichungstag der Anmeldung: 14.01.2004
(73) Patentinhaber: ROBERT BOSCH GMBH, 70442 Stuttgart (DE)
(72) Erfinder: WEILER, Michael, 76131 Karlsruhe (DE); ZIMMER, Joachim, 77880 Sasbach (DE)
(86) Internationale Anmeldenummer: PCT/DE2002/000702
(87) Internationale Veröffentlichungsnummer: WO 2002/074591

(56) Entgegenhaltungen:
- US-A- 2 794 203
- US-A- 4 361 927
- US-A- 5 206 969

## Beschreibung

### Stand der Technik

Bei Wischblätter der im Oberbegriff des Anspruchs 1 bezeichneten Art soll das Tragelement über das gesamte vom Wischblatt bestrichene Wischfeld eine möglichst gleichmäßige Verteilung des vom Wischerarm ausgehenden Wischblatt-Anpressdrucks an der Scheibe gewährleisten. Durch eine entsprechende Krümmung des unbelasteten Tragelements - also wenn das Wischblatt nicht an der Scheibe anliegt - werden die Enden der in Betrieb des Wischblatts vollständig an der Scheibe angelegten Wischleiste durch das dann gespannte Tragelment zur Scheibe belastet, auch wenn sich die Krümmungsradien von sphärisch gekrümmten Fahrzeugscheiben bei jeder Wischblattposition ändern. Die Krümmung des Wischblatts muss also etwas stärker sein als die im Wischfeld an der zu wischenden Scheibe gemessene stärkste Krümmung. Das Tragelement ersetzt somit die bekannte, aufwendige Tragbügelkonstruktion mit zwei in der Wischleiste angeordneten, der Querversteifung der gummielastischen Wischleiste dienenden Federschienen (DE-OS 15 05 397).

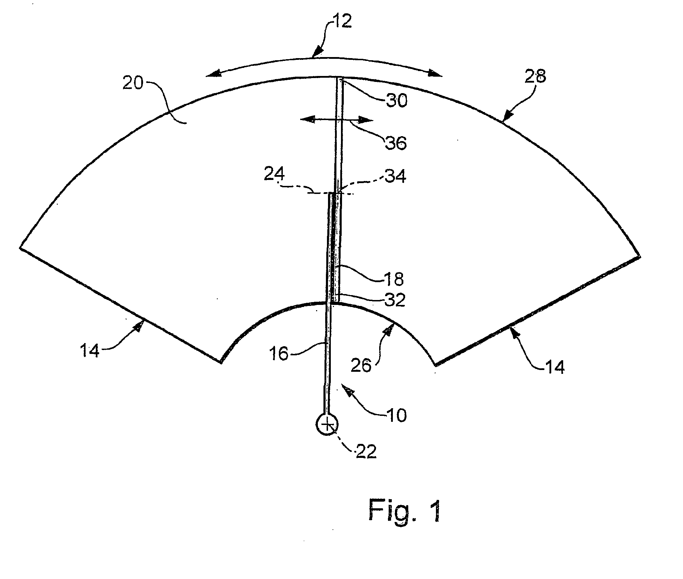

Bei Wischvorrichtungen mit einem quer zur seiner Längserstreckung über die Scheibe geführten Wischblatt kann sich ein Problem ergeben, das anhand der in der Zeichnung-dargestellten Figur 1 erläutert werden soll: Bei der bei Pendelwischanlagen 10 gegebenen Wischbewegung (Doppelpfeil 12 zwischen Pendelumkehrlagen 14) reinigt ein an einem angetriebenen Wischerarm 16 angelenktes Wischblatt 18 ein ringsegmentartiges Wischfeld 20 wobei der einendig gelagertewischerarm 16 samt dem Wischblatt 18 um eine Achse 22 pendelt. Das Wischblatt 18 ist mit dem freien Ende des Wischerarms 16 derart gelenkig verbunden, dass das Wischblatt um eine zur Scheibe etwa parallel ausgerichteten Achse 24 schwingen und sich dem Verlauf der Scheibenoberfläche anpassen kann, welche wegen ihrer Ausformung von der Schwingebene des Wischerarms abweicht. Die Wischfeldbegrenzung ergibt sich aus den beiden Pendelumkehrlagen 14 sowie den Wischradien 26 und 28, von denen der äußere, größere Radius 28 durch das pendelachsenferne Ende 30 des Wischblatts 18 und der innere, kleinere Radius 26 durch das pendelachsennahe Ende 32 des Wischblatts 18 bewirkt werden. Eine Eigentümlichkeit bei derartigen Wischanlagen ist darin zu sehen, dass die Geschwindigkeit mit welcher das Wischblatts 18 über die Scheibe streicht vom inneren Radius 26 zum äußeren Radius 28 zunimmt. Somit nehmen die Reibkräfte als Funktion der Geschwindigkeit vom kleineren Radius 26 zum größeren Radius 28 hin stetig ab. Dabei ergibt sich ein auf das bekannte Wischblatt einwirkendes Moment, welches das Wischblatt um eine auf der Scheibe stehende Hochachse 34 belastet beziehungsweise zu drehen sucht. Die in Abhängigkeit von der dauernd wechselnden Pendelrichtung (Doppelpfeil 12) sich ergebende Wechselbelastung (Doppelpfeil 36) wirkt auf die Lagerstelle zwischen dem Wischerarm 16 und dem Wischblatt 18, welche deshalb entsprechend stabil ausgelegt sein muss. Auch Verschlechtern durch das Moment angeregte Schwingungen im Wischerarm und im Wischblatt - welche dem Wischblatt einen sogenannten "stickslip" Effekt auf der Scheibe aufzwingen - das Wischergebnis.

Zur Vermeidung dieses Mangels ist bei einem bekannten Wischblatt (DE-OS 21 22 678), welches zur möglichst gleichmäßigen Verteilung der vom Wischerarm ausgehenden Kraft zum Anlegen der Wischliste an der Scheibe jedoch mit einem mehrgliedrigen Tragbügelgestell versehen ist, an dessen von der Antriebswelle beziehungsweise von der mit der Welle verbindbaren Wischerarm-Nabe abgewandten Ende des Traggestell-Hauptbügels eine Blattfeder angeordnet, welche mit ihrem einen Ende am Hauptbügel festgelegt ist. Am anderen, freien Ende der in Verschieberichtung des Wischblatts auslenkbaren Blattfeder ist beidseitig des Federblatts je eine kleine Bleiplatte angebracht. Wenn während der Wischarbeit das Wischblatt zu rattern beginnt - was im wesentlichen zu Schwingungen in der Bewegungsebene des Wischblatts führt - wird die Blattfeder ebenfalls zu Schwingungen angeregt. Infolge der Trägheit der Bleiplättchen - bei entsprechender Abstimmung der Blattfeder hinsichtlich deren Länge und deren Dicke sowie der angepassten Größe des Gewichts der Bleiplättchen - sind die Schwingungen der Blattfeder den vom Wischblatt ausgehenden Schwingungen zeitlich versetzt entgegengerichtet und heben diese auf.

Mit der US-A-2 794 203 ist ein Wischblatt mit einem Tragbügelsystem bekannt geworden, das einen Windflügel aufweist, der abhängig von der Anströmgeschwindigkeit des auftreffenden Fahrtwinds mehr oder weniger gegen ein Feder ausgelenkt und so aus dem Fahrtwind herausgenommen wird. Das Schwingungsverhalten des Wischblatts kann damit aber nicht positiv beeinflusst werden.

### Vorteile der Erfindung

Um dem Rattern des gattungsgemäßen Wischblatts entgegen zur wirken, ist dieses entsprechend den kennzeichnenden Merkmalen des Anspruchs 1 ausgebildet. Dadurch kann die Bauhöhe des durch das Tragelement niedrig bauenden Tragelements klein gehalten werden. Auch die Länge des Wischblatts bleibt auf das zum Wischen nötige Maß begrenzt. Das Tragelement besitzt zwei mit Abstand von einander und parallel zueinander verlaufende, in einer gemeinsamen Ebene angeordnete Federschienen wobei sich die Wischleiste zumindest über einen Teil ihrer Länge mit einem Fortsatz durch den Spalt zwischen den beiden Federschienen erstreckt. An diesem Fortsatz lässt sich dann auf einfache Weise zumindest ein Massenkörper anordnen.

Wenn der Massenkörper leistenartig ausgebildet ist und sich in Längsrichtung des Tragelements erstreckt, kann dieser gemäß den jeweiligen Kriterien mit einer entsprechenden Länge versehen werden, die maximal der Wischblatt-Länge entspricht. Auf diese Weise ist es möglich, die zur Verfügung stehende Masse den Erfordernissen anzupassen, ohne dass das Wischblatt einen größeren Raumbedarf hat.

Für eine Vielzahl von Anwendungsfällen, bei denen der Forderung nach einer Windabweisleiste Rechnung getragen werden muss ist mit Vorteil der Massenkörper als Windabweisleiste ausgebildet.

Zur Beeinflussung der Schwerpunktlage des Massenkörpers bezüglich des Tragelements und damit zur Veränderung von dessen Schwingfrequenz kann es zweckmäßig sein, wenn der Massenkörper einen wenigstens annähernd dreieckigen Querschnitt hat oder aber wenn der Massenkörper im Querschnitt gesehen an seinem von dem Fortsatz abgewandten, freien Ende mit einer Verdickung versehen ist.

In Weiterbildung des Erfindungsgedankens besteht die Windabweisleiste aus einem anderen Material als die mit ihr gemeinsam gefertigte und mit ihr fest verbundene Wischleiste. Dadurch ist die Wahl eines Werkstoffs möglich, der sowohl für die Wischleiste beziehungsweise für die Erfüllung der an diese gestellten Anforderungen besonders geeignet ist, während auch den Belangen des Massenkörpers beziehungsweise der Windabweisleiste in besonderen Weise Rechnung getragen werden kann.

Bei Anwendungsfällen mit besonders anspruchsvollen an das Wischblatt und dessen Windabweisleiste gestellten Anforderungen lässt sich ein Mehrstoff-Verbund dieser Elemente dadurch erreichen, dass die Wischleiste einen Grundkörper hat, der an seiner von der Scheibe abgewandten Seite über den Fortsatz in die Windabweisleiste übergeht und weiter an der der Scheibe zugewandten Seite des Grundkörpers eine an der Scheibe anlegbare, leistenartige, aus einem anderen Material gemeinsam mit dem Grundkörper gefertigte Wischlippe angeordnet ist, welche über eine stegleiste mit dieser verbunden ist.

Eine weitere Ausgestaltung der Erfindung sieht vor, dass an den Fortsatz eine als langgestreckter Hohlkörper ausgebildete Windabweisleiste angeformt ist, in deren Aushöhlung sich der mit dem Fortsatz verbundene, frei in Verschieberichtung des Wischblatts beweglicher Massenkörper befindet.

Bei derartigen Ausführungsformen des Wischblatts hat es sich als besonders vorteilhaft erwiesen, wenn im Querschnitt gesehen der Fortsatz der Wischleiste an der oberen Bandseite des Tragelements in einen bandartigen Basisstreifen. übergeht, mit dem die Windabweisleiste über eine durch seitliche randoffene Längsnuten gebildete Gelenkleiste verbunden ist. Das Tragelement umfasst somit zwei in einer gemeinsamen, zur Scheibe etwa parallel verlaufenden Ebene liegende Federbänder, welche in ihnen zugeordneten, durch den Basisstreifen nach oben begrenzten Nuten liegen. Der Abstand zwischen dem einander zugewandten Innenkanten der Federbänder ermöglicht den Durchtritt der Wischleiste durch das Tragelement. Die Gelenkleiste ermöglicht die nötige Beweglichkeit des Massenkörpers in Verschieberichtung des Wischblatts, wobei sich deren Dimensionierung an den Erfordernissen hinsichtlich der erforderlichen Schwingfrequenz des Massenkörpers orientiert.

Wenn dabei, im Querschnitt gesehen, der Fortsatz der Wischleiste an der oberen Bandseite des Tragelements in einen bandartigen Basisstreifen übergeht, mit dem der aus einem anderen Material bestehende, mit der Wischleiste gemeinsam gefertigte Hohlkörper über eine durch seitlich randoffene Längsnuten gebildete Gelenkleiste fest verbunden ist, kann für die Materialauswahl für den Hohlkörper auch ein Stoff herangezogen werden, der für diesen besonders vorteilhaft, für die Erfüllung der an die Wischleiste gestellten Aufgaben jedoch ungeeignet ist.

Weitere Vorteile für das erfindungsgemäße Wischblatt können sich ergeben, wenn der Massenkörper aus einem anderen Material besteht als die mit ihm gemeinsam gefertigte und fest verbundene Wischleiste.

Wie schon dargelegt, ist für eine vorschriftsmäßige Verteilung des Anpreßdrucks des Wischblatts bzw. des Wischerarms eine Grundvoraussetzung, dass das unbelastete Tragelement in seiner Längsrichtung gekrümmt ist, wobei an der konvexen äußeren Seite des Tragelements die Anschlußvorrichtung für den Wischerarm sitzt und an dessen konkaven inneren Seite des Tragelements die Wischleiste angeordnet ist.

Weitere vorteilhafte Weiterbildung und Ausgestaltungen der Erfindung sind in der nachfolgenden Beschreibung von in der dazugehörigen Zeichnung dargestellten Ausführungsbeispielen angegeben.

### Zeichnung

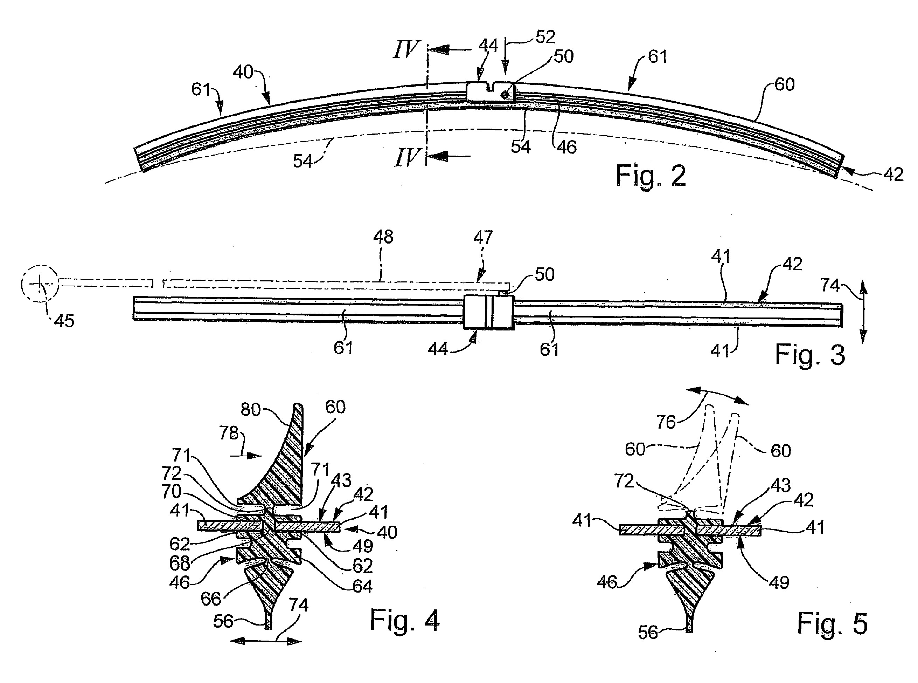

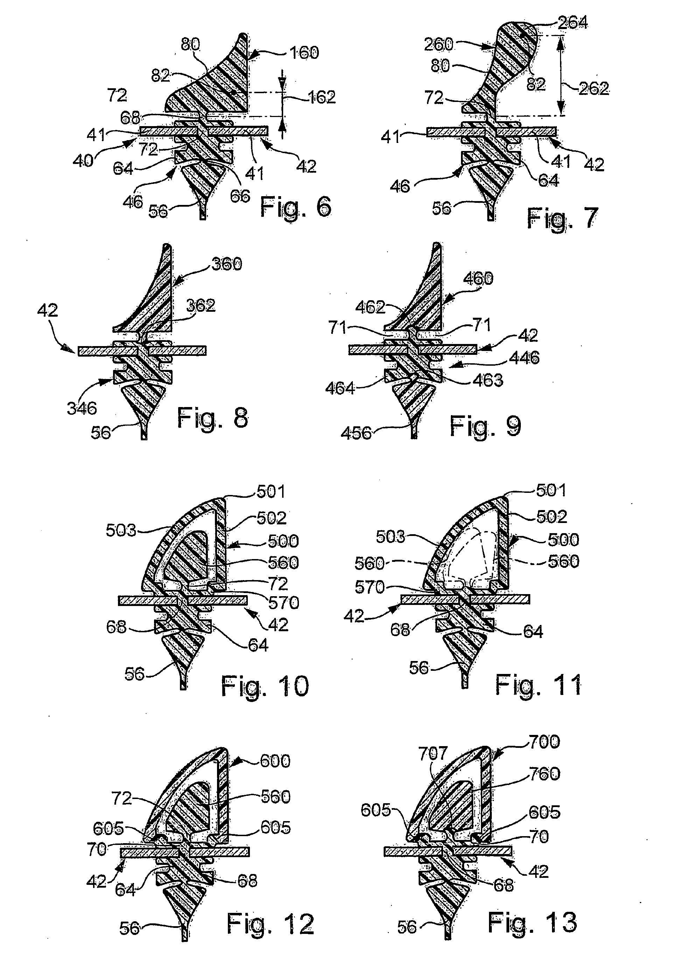

In der Zeichnung zeigen Figur 1 eine Prinzipdarstellung einer Pendelwischanlage für Scheiben von Kraftfahrzeugen mit einem am Wischerarm angelenkten Wischblatt und dem vom Wischblatt überstrichenen Wischfeld, Figur 2 eine Seitenansicht eines erfindungsgemäßen Wischblatts, Figur 3 eine Draufsicht auf das Wischblatt gemäß Figur 2 mit angedeutetem Wischerarm, Figur 4 die vergrößerte Schnittfläche eines Schnitts durch das Wischblatt gemäß Figur 2, entlang der Linie IV-IV, Figur 5 die Anordnung gemäß Figur 4 mit der Andeutung der Schwing-Endpositionen eines am Wischblatt angeordneten Massenkörpers, Figur 6 eine andere Ausgestaltung des am Wischblatt vorhandenen Massenkörpers, Figur 7 die Anordnung gemäß Figur 4 mit einer weiteren Ausgestaltung des am Wischblatt vorhandenen Massenkörpers, Figur 8 die Anordnung gemäß Figur 4 mit einer Zweistoff-Wischleiste, Figur 9 die Anordnung gemäß Figur 4 mit einer Mehrstoff-Wischleiste, Figur 10 die Anordnung gemäß Figur 4 bei welcher der Massenkörper in einer mit einer Aushöhlung versehenen Windabweisleiste untergebracht ist, Figur 11 die Anordnung gemäß Figur 10 mit der Andeutung der Schwing-Endpositionen des Massenkörpers aus Figur 10, Figur 12 die Anordnung gemäß Figur 10, bei welcher die Windabweisleiste aus einem anderen Material als die Wischleiste gefertigt ist und Figur'13 die Anordnung gemäß Figur 12 bei welcher auch der Massenkörper aus einem anderen Material als die Wischleiste gefertigt ist.

### Beschreibung der Ausführungsbeispiele

Ein in den Figuren 2 und 3 dargestelltes Wischblatt 40 einer ersten Ausführungsform der Erfindung weist ein bandartig langgestrecktes, federelastisches Tragelement 42 mit zwei mit Abstand voneinander und parallel zueinander verlaufenden, in einer gemeinsamen Ebene angeordneten Federschienen 41 auf. An der von der zu wischenden Scheibe 54 abgewandten Oberseite 43 des Tragelements 42 (Figur 4) ist in dessen Mittelabschnitt eine Anschlussvorrichtung 44 angeordnet, mit deren Hilfe das Wischblatt 40 mit einem an der Karosserie eines Kraftfahrzeugs geführten, um eine Pendelachse 45 pendelnd angetriebenen Wischerarms 48 lösbar verbunden werden kann (Figur 2 und 3). An der der Scheibe 54 zugewandten Unterseite 49 des Tragelements 42 ist eine langgestreckte, gummielastische Wischleiste 46 längsachsenparellel gehalten. An dem freien Ende 47 des Wischerarms 48 ist als Gegenanschlussmittel ein zur Anschlussvorrichtung 44 des Wischblatts 40 gehörender Gelenkbolzen 50 vorgesehen, welcher im Sinne eines Gelenks mit einer in der Anschlußvorrichtung 44 vorhandenen Lagerstelle zusammenwirkt. Der Wischerarm 48 und damit auch das Wischblatt 40 sind in Richtung des Pfeiles 52 zur zu wischenden Scheibe 43 belastet, deren zu wischende Oberfläche in Figur 2 durch die strichpunktierte Linie 54 angedeutet ist. Da die strichpunktierte Linie 54 die stärkste Krümmung der Scheibenoberfläche darstellen soll ist klar ersichtlich, dass die Längskrümmung des mit seinen Enden an der Scheibe anliegenden, noch unbelasteten Wischblatts stärker ist als die maximale Scheibenkrümmung. Es hat - unbelastet - also gegenüber der Scheibe einen konkaven Verlauf. An der konvexen äußeren Oberseite 43 des Tragelements 42 sitzt die Anschlußvorrichtung 44 und an der konkaven inneren Unterseite 49 des Tragelements 42 ist die Wischleiste 46 mit ihrer die Wischarbeit verrichtende Wischlippe 56 angeordnet. Unter den Anpreßdruck (Pfeil 52) legt sich das Wischblatt 40 mit seiner Wischlippe 56 über seine gesamte Länge an der Scheibenoberfläche 50 an und geht in eine der Strecklage angenäherte Arbeitslage über. Dabei baut sich im bandartigen federelastischen Tragelement 42 eine Spannung auf, welche für eine ordnungsgemäße Anlage der Wischleiste 46 beziehungsweise deren Wischlippe 56 über deren gesamte Länge an der Kraftfahrzeugscheibe 54 sorgt und somit für eine vorschriftsmäßige Verteilung des Anpreßdrucks.

Im Folgenden soll nun auf die besondere Ausgestaltungen des erfindungsgemäßen Wischblatts 40 näher eingegangen werden. Bei einer ersten Ausführungsform (Figuren 4 und 5) ist das Wischblatt 40 mit einem leistenartig ausgebildeten Massenkörper 60 versehen, der sich in Längsrichtung des Tragelements 42 erstreckt. Der Massenkörper 60 ist im Bereich der von der Scheibe abgewandten oberen Bandfläche 43 des Tragelements 42 angeordnet. Das Tragelement 42 hat beim Ausführungsbeispiel zwei mit Abstand voneinander und parallel zueinander verlaufende, in einer gemeinsamen Ebene angeordnete Federschienen 41, welche in seitlich randoffenen Längsnuten 62 der Wischleiste 46 liegen. Die Wischleiste 46 hat einen im Querschnitt im wesentlichen quadratischen Grundkörper 64 an dessen unteren, der Scheibe zugewandten Seite sich die Wischlippe 56 befindet. Die Wischlippe 56 selbst ist über einen schmalen Kippsteg 66 mit dem Grundkörper 64 verbunden. Der Grundkörper 64 weist die beiden seitlich randoffenen Längsnuten 62 für die Federschienen 41 des Tragelements 42 auf. Die Wischleiste, beziehungsweise deren Grundkörper 64 erstreckt sich mit einem Fortsatz 68 durch den Spalt zwischen den beiden Federschienen 41, welcher an der oberen Bandfläche 43 des Tragelements 42 in einen bandartigen Basisstreifen 70 übergeht. An der vom Tragelement abgewandten Oberseite des Basisstreifens 70 geht dieser durch die Anordnung von zwei seitlich randoffene Längsnuten in eine schmale Gelenkleiste 72 über, welche sich ebenfalls in Längsrichtung des Wischblatts 18 erstreckt. Zur Wischleiste 46 gehören somit der Grundkörper 64 mit seinem Fortsatz 68 und dem Basisstreifen 70, der Kippsteg 66, die die Wischarbeit verrichtende Wischlippe 56, die Gelenkleiste 72 und der Massenkörper 60. Mit Abstand von dem Grundkörper 64 beziehungsweise mit Abstand von dessen Basisstreifen 70 ist an der Gelenkleiste 72 der Massenkörper 60 angeordnet beziehungsweise einstückig über die Gelenkleiste 72 mit dem Grundkörper 64 verbunden. Da die Gelenkleiste 72 somit ebenfalls aus einem gummielastischen Material besteht, ist der Massenkörper 60 in Verschieberichtung des Wischblatts (Doppelpfeil 74) beweglich angeordnet, so dass er über einen bestimmten Winkel um die Gelenkleiste 72 schwingen kann. Diese Schwingbewegung ist in Figur 5 durch einen Doppelpfeil 76 angegeben. Der Massenkörper selbst ist in dieser Figur mittels strichpunktierten Linien in seinen beiden Schwing-Endpositionen.

Wenn nun während des Wischbetriebs - bei dem das Wischblatt 18 quer zu seiner Längserstreckung in Richtung des Doppelpfeils 74 (Figur 4) über die Scheibe 54 verschoben wird - und aufgrund beispielsweise der vorerwähnten Umstände die Gleitbewegung des Wischblatts in eine Ratterbewegung . übergeht, wird der Massenkörper 60 in eine zeitlich der Ratterbewegung entgegengesetzte Schwingbewegung (Doppelpfeil 76) versetzt, so dass die Ratter-Schwingungen nahe am Entstehungsort unterbunden werden. Dies ist insbesondere dann der Fall, wenn die Größe der Masse des Massenkörpers 60 und die Dimensionierung der Gelenkleiste 72 auf die Kriterien des jeweiligen Anwendungsfalls des Wischblatts abgestimmt sind. Die Ratter-Schwingungen können sich somit nicht über den Wischerarm auf das Getriebe und den Antriebsmotor der Wischvorrichtung fortpflanzen, so dass auch diese Antriebsanteile der Wischvorrichtung nicht zu Schwingungen und damit zur Geräuschbildung angeregt werden. Eine besonders vorteilhafte Ausgestaltung der Erfindung ist darin zu sehen, dass der Massenkörper 60 als Windabweisleiste ausgebildet ist. Dazu weist der Massenkörper an seiner während des Wischbetriebs der hauptsächlichen Luftströmung (Pfeil 78) zugewandten Längsseite eine Hohlkehle 80 auf, welche den insbesondere bei hohen Fahrgeschwindigkeiten auf das Wischblatt einwirkenden Abhebebestrebungen entgegenwirkt. Die Länge des als Windabweisleiste ausgebildeten Massenkörpers orientiert sich an den jeweiligen, fahrzeugspezifischen Gegebenheiten. Aus den Figuren 2 und 3 ist ersichtlich, dass der Massenkörper 60 zwei Teil-Massenkörper 61 aufweist, welche beidseitig der Anschlussvorrichtung 44 angeordnet sind.

Auch die Lage des Massenkörperschwerpunkts beziehungsweise der Schwerpunktlängsachse bezüglich der Gelenkleiste 72 kann wesentlich zu einer effektiven Tilgung der Ratter-Schwingungen beitragen. Zwei Beispiel sind dazu in den Figuren 6 und 7 angegeben. Da die beiden Ausführungsbeispiele lediglich in der Querschnittsform von dem schon beschriebenen Ausführungsbeispiel gemäß den Figuren 4 und 5 abweichen, werden - soweit erforderlich - die dort verwendeten Bezugszeichen auch hier verwendet. Bei der gedrungenen Querschnittsform gemäß Figur 6 ergibt sich eine Schwerpunktlinie des als Windabweisleiste ausgebildeten Massenkörpers 160, deren wirksamer Abstand 162 von der Gelenkleiste 72 relativ klein ist.

Dagegen ist der wirksame Abstand 262 von der Gelenkleiste 72 bei der ebenfalls als Windabweisleiste ausgebildeten Ausführungsform gemäß Figur 7 relativ groß. Dies rührt daher, dass der Massenkörper 260 beim Ausführungsbeispiel gemäß Figur 7 im Querschnitt gesehen an seinem vom Fortsatz 68 abgewandten, freien Ende mit einer Verdickung 264 versehen ist.

Abweichend von den schon beschriebenen Ausführungsbeispielen, bei denen die Wischleiste 46 drei einstückig miteinander verbundene, leistenartige Bereiche aufweist -* den Grundkörper 64, die Wischlippe 56 und die Massenkörperleiste 60 bzw. 160 bzw. 260 - ist bei der Ausführungsform gemäß Figur 8 die Massenkörperleiste 360 der Windleiste 346 aus einem anderen Material hergestellt als die Grundkörperleiste 364 mit ihrer Wischlippe 56. Die Verbindungsnaht zwischen der Grundkörperleiste 364 und der Massenkörperleiste 360 ist in Figur 8 mit der Bezugszahl 362 versehen worden. Auch bei dieser Ausführungsform ist die Massenkörperleiste 360 als Windabweisleiste ausgebildet. Durch diese besondere Ausgestaltung ist es möglich, die Materialauswahl so zu optimieren, dass die Massenkörperleiste 360 beispielsweise steifer ist als die Grundkörperleiste 364 mit ihrer Wischlippe 56.

Auch bei der Ausführungsform gemäß Figur 9 ist die als Windabweisleiste ausgebildete Massenkörperleiste 460 aus einem anderen Material hergestellt als die Grundkörperleiste 464. Die Verbindungsnaht ist dort mit der Bezugszahl 462 versehen worden. Darüber hinaus besteht die Wischlippe 456 ebenfalls aus einem anderen Materials als die Grundkörperleiste 464. Die Verbindungsnaht zwischen Grundkörperleiste 464 und Wischlippe 456 ist in Figur 9 mit 463 bezeichnet. Neben dem schon erwähnten Vorteil beispielsweise der Versteifung der Massenkörperleiste 460 gegenüber der Grundkörperleiste 464 ist es bei dieser Ausführungsform auch möglich, die Wischlippenleiste 456 hinsichtlich der Materialauswahl im Hinblick auf das angestrebte Wischergebnis weiter zu optimieren.

Den Ausführungsformen gemäß Figuren 10, 11 sowie 12 und 13 ist gemeinsam, dass an dem Fortsatz 68 beziehungsweise an den sich an den Fortsatz anschließenden Basisstreifen 70 der Wischleiste beziehungsweise des Grundkörpers 64 eine als langgestreckter Hohlkörper ausgebildeter Windabweisleiste angeformt ist, in deren Aushöhlung sich - gegen die anströmende Luft geschützt - der mit dem Fortsatz beziehungsweise mit dem Basisstreifen verbundene, in Verschieberichtung des Wischblatts bewegliche Massenkörper befindet. Aus Figur 10 ist ersichtlich, dass die als Hohlkörper ausgebildete Windabweisleiste 500 den leistenförmigen Massenkörper 560 mit Abstand umgibt. Die Windabweisleiste weist zwei von einer Scheitellinie 501 aus divergierende Schenkel 502, 503 auf, deren Enden nahe des Tragelements 42 in den Basisstreifen 570 übergehen. In Figur 11 sind die beiden Schwingbewegungs-Endpositionen des Massenkörpers 560 strichpunktiert angedeutet. Bei der Dimensionierung des Massenkörpers beziehungsweise der als Hohlkörper ausgebildeten Windabweisleiste 500 ist darauf zu achten, dass die Massenkörperleiste 560 nicht durch die Schenkel 502, 503 der Windabweisleiste 500 in ihrer Bewegungsfreiheit eingeschränkt werden. Ein Anschlagen der Massenkörperleiste an den Innenwänden der Schenkel würde zu weiteren, unkontrollierbaren Schwingungen im Wischblatt führen.

Bei der Ausführungsform gemäß Figur 12 ist die Windabweisleiste 600 aus einem anderen Material hergestellt als die Wischleiste mit ihrer Grundkörperleiste 64, ihrer Wischlippenleiste 56 und ihrer Massenkörperleiste 560. Die sich dabei ergebenden Verbindungsnähte sind in Figur 12 mit der Bezugszahl 605 versehen worden.

Die Ausführungsform gemäß Figur 13 entspricht im wesentlichen der Ausführungsform gemäß Figur 12, wobei die Windabweisleiste 700 ebenso aus einem anderen Material besteht als die Grundkörperleiste 64 mit deren Wischlippenleiste 56. Allerdings ist bei der Ausführungsform gemäß Figur 13 die Massenkörperleiste 760 aus einem anderen Material gebildet als die Grundkörperleiste 64 und/oder als die Windabweisleiste 700. Die sich dabei ergebende Verbindungsnaht ist in Figur 13 mit der Bezugszahl 707 versehen worden.

Allen hier vorgeschlagenen Ausführungsformen der Erfindung ist gemeinsam, dass sie im kostengünstigen Extrusionsverfahren hergestellt werden können. Für die Ausführungsformen gemäß den Figuren 8 und 12 bietet sich die sogenannte Zweistoff-Extrusion an, während die Ausführungsformen gemäß den Figuren 9 und 13 das sogenannte Mehrstoff-Extrusionsverfahren von Vorteil ist.

Eine weitere wesentliche Gemeinsamkeit aller beschriebenen Ausführungsformen der Erfindung ist darin zu sehen, dass im Bereich der von der Scheibe abgewandten oberen Bandfläche 43 des Tragelements 42 das Wischblatt 40 mit einem Massenkörper 60 bzw. 160 bzw. 260 bzw. 360 bzw. 460 bzw. 560 bzw. 660 bzw. 760 versehen ist, der zumindest in Verschieberichtung (Doppelpfeil 74) des Wischblatts beweglich angeordnet ist.

## Patentansprüche

1. Wischblatt zum Reinigen von Scheiben insbesondere von Kraftfahrzeugen, das quer zur seiner Längserstreckung vorzugsweise um eine Pendelachse verschiebbar und mit einer langgestreckten, gummielastischen Wischleiste (46) an der zu wischenden Scheibe anlegbar ist, wobei die Wischleiste an der der Scheibe (54) zugewandten unteren Bandfläche (49) eines bandartig langgestreckten, federelastischen Tragelements (42) angeordnet ist, wobei im Bereich der von der Scheibe abgewandten oberen Bandfläche (43) des Tragelements (42) das Wischblatt mit einem Massenkörper (60, 160, 260, 360, 460, 560, 660, 760) versehen ist, der zumindest in Verschieberichtung (74) des Wischblatts beweglich angeordnet insbesondere kippbar ist, **dadurch gekennzeichnet, dass** das Tragelement (42) zwei mit Abstand voneinander und parallel zueinander verlaufende, in einer gemeinsamen Ebene angeordnete Federschienen (41) hat, dass sich die Wischleiste zumindest über einen Teil ihrer Länge mit einem Fortsatz (68) durch einen Spalt zwischen den beiden Federschienen (41) erstreckt und dass an dem Fortsatz zumindest der Massenkörper (60, 160, 260, 360, 460, 560, 660, 760) angeordnet ist.

2. Wischblatt nach Anspruch 1 , **dadurch gekennzeichnet, dass** der Massenkörper (60, 160, 260, 360, 460, 560, 660, 760) leistenartig ausgebildet ist und sich in Längsrichtung des Tragelements (42) erstreckt.

3. Wischblatt nach einem der Ansprüche 1 oder 2, **dadurch gekennzeichnet, dass** der Massenkörper (60, 160, 260, 360, 460) als Windabweisleiste ausgebildet ist.

4. Wischblatt nach einem der Ansprüche 1 bis 3, **dadurch gekennzeichnet, dass** der Massenkörper (60, 160, 260, 360, 460) einen wenigstens annähernd dreieckigen Querschnitt hat.

5. Wischblatt nach einem der Ansprüche 1 bis 4, **dadurch gekennzeichnet, dass** der Massenkörper (60, 160, 260, 360, 460) im Querschnitt gesehen an seinem von dem Fortsatz (72) abgewandten freien Ende mit einer Verdickung (264) versehen ist.

6. Wischblatt nach Anspruch 3, **dadurch gekennzeichnet, dass** die Windabweisleiste (360, 460) aus einem anderen Material besteht als die mit ihr gemeinsam gefertigt und mit ihr fest verbundene Wischleiste (346).

7. Wischblatt nach Anspruch 6, **dadurch gekennzeichnet, dass** die Wischleiste einen Grundkörper (64) hat, der an seiner von der Scheibe (54) abgewandten Seite über den Fortsatz (68) in die Windabweisleiste (60, 160, 260, 360, 460) übergeht und dass an der der Scheibe (54) zugewandten Seite des Grundkörpers (64) eine an der Scheibe anlegbare leistenartige, aus einem anderen Material gemeinsam mit dem Grundkörper gefertigte Wischlippe (56) angeordnet ist, welche über eine Stegleiste mit dieser verbunden ist.

8. Wischblatt nach einem der Ansprüche 1 oder 2, **dadurch gekennzeichnet, dass** an den Fortsatz (68) eine als langgestreckter Hohlkörper ausgebildete Windabweisleiste (500, 600, 700) angeformt ist, in deren Aushöhlung sich der mit dem Fortsatz verbundene, in Verschieberichtung (74) des Wischblatts bewegliche Massenkörper (560, 760) befindet.

9. Wischblatt nach Anspruch 8, **dadurch gekennzeichnet, dass** im Querschnitt gesehen der Fortsatz (68) der Wischleiste an der oberen Bandseite des Tragelements in einen bandartigen Basisstreifen (70) übergeht, mit dem der aus einem anderen Material bestehende, mit der Wischleiste gemeinsam gefertigte Hohlkörper (600, 700) über eine durch seitlich randoffene Längsnuten (71) gebildete Gelenkleiste (72) fest verbunden ist.

10. Wischblatt nach Anspruch 9, **dadurch gekennzeichnet, dass** der Massenkörper (760) aus einem anderen Material besteht als die mit ihm gemeinsam gefertigte und fest verbundene Wischleiste.

11. Wischblatt nach einem der vorhergehenden Ansprüche, **dadurch gekennzeichnet, dass** das unbelastete Tragelement (42) in Längsrichtung gekrümmt ist, dass sich an der konvexen, äußeren Seite (43) des Tragelements (42) die Anschlussvorrichtung (44) für den Wischerarm (48) befndet und dass an der konkaven, inneren Seite (49) des Tragelements (42) die Wischleiste (46) angeordnet ist.

## Claims

1. Wiper blade for cleaning panes of glass, particularly in motor vehicles, which wiper blade can be displaced preferably about an axis of oscillation transversely with respect to its longitudinal extent and can be placed with an elongate, rubber-elastic wiper strip (46) against the pane of glass to be wiped, the wiper strip being arranged on the lower band surface (49), which faces the pane of glass (54), of a resilient supporting element (42) which is elongate in the manner of a band, the wiper blade being provided in the region of the upper band surface (43), which faces away from the pane of glass, of the supporting element (42) with a mass body (60, 160, 260, 360, 460, 560, 660, 760) which is arranged movably, in particular tiltably, at least in the displacement direction (74) of the wiper blade, **characterized in that** the supporting element (42) has two spring rails (41) which run at a distance from each other and parallel to each other and are arranged in a common plane, **in that** the wiper strip extends, at least over part of its length, with an extension (68) through a gap between the two spring rails (41), and **in that** at least the mass body (60, 160, 260, 360, 460, 560, 660, 760) is arranged on the extension.

2. Wiper blade according to Claim 1, **characterized in that** the mass body (60, 160, 260, 360, 460, 560, 660, 760) is of strip-like design and extends in the longitudinal direction of the supporting element (42).

3. Wiper blade according to either of Claims 1 and 2, **characterized in that** the mass body (60, 160, 260, 360, 460) is designed as a wind-deflecting strip.

4. Wiper blade according to one of Claims 1 to 3, **characterized in that** the mass body (60, 160, 260, 360, 460) has an at least approximately triangular cross section.

5. Wiper blade according to one of Claims 1 to 4, **characterized in that** the mass body (60, 160, 260, 360, 460), as seen in cross section, is provided with a thickening (264) at its free end facing away from the extension (72).

6. Wiper blade according to Claim 3, **characterized in that** the wind-deflecting strip (360, 460) is composed of a different material than the wiper strip (346) which is manufactured together with it and is connected fixedly to it.

7. Wiper blade according to Claim 6, **characterized in that** the wiper strip has a basic body (64) which, on its side facing away from the pane of glass (54), merges via the extension (68) into the wind-deflecting strip (60, 160, 260, 360, 460), and **in that**, on that side of the basic body (64) which faces the pane of glass (54), there is arranged a strip-like wiping lip (56) which can be placed on the pane of glass, is manufactured from a different material together with the basic body and is connected thereto via a web strip.

8. Wiper blade according to either of claims 1 and 2, **characterized in that** a wind-deflecting strip (500, 600, 700) designed as an elongate hollow body is integrally formed on the extension (68) and has situated in its cavity a mass body (560, 760) which is connected to the extension and is movable in the displacement direction (74) of the wiper blade.

9. Wiper blade according to Claim 8, **characterized in that**, as seen in cross section, the extension (68) of the wiper strip merges on the upper band side of the supporting element into a band-like base strip (70) to which the hollow body (600, 700), which is composed of a different material and is manufactured together with the wiper strip, is connected fixedly via an articulated strip (72) formed by longitudinal grooves (71) open laterally at the edge.

10. Wiper blade according to Claim 9, **characterized in that** the mass body (760) is composed of a different material than the wiper strip which is manufactured together with it and is connected fixedly to it.

11. Wiper blade according to one of the preceding claims, **characterized in that** the unloaded supporting element (42) is curved in the longitudinal direction, **in that** the connecting device (44) for the wiper arm (48) is situated on the convex, outer side (43) of the supporting element (42), and **in that** the wiper strip (46) is arranged on the concave, inner side (49) of the supporting element (42).

## Revendications

1. Balai d'essuie-glace de vitres, notamment de véhicules automobiles, coulissant transversalement à son extension longitudinale, de préférence autour d'un axe pendulaire, et ayant une lame d'essuyage (46), allongée, élastique comme du caoutchouc, et qui s'applique contre la vitre à essuyer,
la lame d'essuyage étant appliquée contre la face inférieure (49) tournée vers la vitre (54), en forme de bande d'un élément de support (42) allongé, élastique comme un ressort, en forme de ruban,
dans la zone de la surface supérieure (43) en forme de bande non tournée vers la vitre et appartenant à l'élément de support (42), le balai d'essuie-glace est muni d'un corps massique (60, 160, 260, 360, 460, 560, 660, 760) monté mobile dans la direction de coulissement (47) du balai d'essuie-glace, notamment susceptible de pivoter,
**caractérisé en ce que**
l'élément de support (42) comporte deux rails élastiques (41) écartés et parallèles l'un à l'autre dans un plan commun,
la lame d'essuyage s'étend sur au moins une partie de leur longueur avec un prolongement (68) à travers l'intervalle entre les deux rails élastiques (41) et
au moins le corps massique (60, 160, 260, 360, 460, 560, 660, 760) est associé au prolongement.

2. Balai d'essuie-glace selon la revendication 1,
**caractérisé en ce que**
le corps massique (60, 160, 260, 360, 460, 560, 660, 760) est en forme de barrette et s'étend dans la direction longitudinale de l'élément de support (42).

3. Balai d'essuie-glace selon l'une des revendications 1 ou 2,
**caractérisé en ce que**
le corps massique (60, 160, 260, 360, 460) est en forme de déflecteur.

4. Balai d'essuie-glace selon l'une des revendications 1 à 3,
**caractérisé en ce que**
le corps massique (60, 160, 260, 360, 460) a une section au moins sensiblement triangulaire.

5. Balai d'essuie-glace selon l'une des revendications 1 à 4,
**caractérisé en ce que**
le corps massique (60, 160, 260, 360, 460) a une section munie d'un renforcement (264) à son extrémité libre non tournée vers le prolongement (72).

6. Balai d'essuie-glace selon la revendication 3,
**caractérisé en ce que**
le déflecteur (360, 460) est réalisé dans une autre matière que la lame d'essuyage (346) fabriquée en commun avec celui-ci et solidaire du déflecteur.

7. Balai d'essuie-glace selon la revendication 6,
**caractérisé en ce que**
la lame d'essuyage comporte un corps de base (64) dont le côté non tourné vers la vitre (54) rejoint par le prolongement (68) le déflecteur (60, 160, 260, 360, 460) et
le côté du corps de base (64) tourné vers la vitre (54) comporte une lèvre d'essuyage (56) en forme de barrette, s'appliquant contre la vitre, et réalisée en une autre matière, la même que celle du corps de base.

8. Balai d'essuie-glace selon l'une des revendications 1 ou 2,
**caractérisé en ce que**
le prolongement (68) comporte un déflecteur (500, 600, 700) réalisé sous la forme d'un corps creux allongé et dont la partie creuse reçoit le corps massique (560, 760), relié au prolongement et mobile dans la direction de coulissement (74) du balai d'essuie-glace.

9. Balai d'essuie-glace selon la revendication 8,
**caractérisé en ce qu'**
en section, le prolongement (68) de la lame d'essuyage rejoint le côté supérieur en forme de ruban de l'élément de support par un ruban de base (70) en forme de bande, auquel est relié solidairement le corps creux (600, 700) en une autre matière, fabriqué en commun avec la lame d'essuyage, en étant relié solidairement par un longeron d'articulation (72) formé entre les rainures longitudinales (71) dont les bords latéraux sont ouverts.

10. Balai d'essuie-glace selon la revendication 9,
**caractérisé en ce que**
le corps massique (760) est réalisé en une autre matière que celle de la lame d'essuyage, fabriquée en commun et reliée solidairement à celui-ci.

11. Balai d'essuie-glace selon l'une des revendications précédentes,
**caractérisé en ce que**
l'élément de support (42) non chargé est cintré dans la direction longitudinale, le dispositif d'accouplement (44) du bras d'essuie-glace (48) se trouvant sur le côté extérieur convexe (43) de l'élément de support (12) et la lame d'essuyage (46) est prévue sur le côté intérieur concave (49) de l'élément de support (42).
